# EUROPEAN PATENT SPECIFICATION

(11) **EP 4 401 941 B1**
(45) Date of publication and mention of the grant of the patent: **10.09.2025**
(21) Application number: 22789983.8
(22) Date of filing: 15.09.2022
(51) Int. Cl.: B29C 45/14, B29C 63/00, B29C 63/26, F16L 55/07

(54) **VENTS IN PIPELINE LINERS**
LUFTÖFFNUNGEN IN ROHRLEITUNGSAUSKLEIDUNGEN
ÉVENTS DANS DES GAINES DE PIPELINE

(30) Priority: 15.09.2021 GB 202113187
(43) Date of publication of application: 24.07.2024
(73) Proprietor: Subsea 7 Limited, Sutton, Surrey SM2 5BN (GB)
(72) Inventor: SMITHSON, Mark Robert, Crossford ML8 5RG (GB); MATHIESON, Scott, Glasgow G41 3DB (GB)
(74) Representative: Keltie LLP
(86) International application number: PCT/GB2022/052338
(87) International publication number: WO 2023/041917

(56) References cited:
- WO-A1-00/08368
- JP-A- 2006 315 725
- US-A1- 2004 074 551
- US-A1- 2006 145 479
- US-A1- 2007 222 113
- US-A1- 2010 221 995

## Description

This invention relates to internally-lined pipelines and particularly to arrangements in which vents penetrate the liner to mitigate the effects of fluid permeation. The invention aims to improve the long-term performance of such vents.

Corrosion protection is a key issue for pipelines used in the oil and gas industry, which are usually made of carbon steel to reduce cost over often great lengths. Liners of composites or polymers, for example high density polyethylene (HDPE), have been used for more than thirty years to mitigate internal corrosion of pipelines as an alternative to more expensive liners of corrosion-resistant alloys. Polymer or composite liners also aid thermal insulation of the pipeline, which may be useful in subsea applications especially. For brevity, polymer or composite liners will be referred to collectively in this specification as plastics liners unless the context requires otherwise.

Whilst they are effective to resist aggressively corrosive fluids, plastics liners suffer from problems in practice. One such problem is permeation of fluids through the liner material. During operation, liquids and especially gases or vapours present in the fluid flowing through the pipeline tend to migrate through the liner wall to enter the micro-annulus between the liner and the surrounding host pipe. There could also be leakage of fluid into the micro-annulus around the liner, for example through any gaps at joints between lined pipeline sections.

Fluid accumulating in the micro-annulus will progressively jeopardise bonding or engagement between the liner and the host pipe and may promote corrosion of the host pipe. Also, transfer of fluid into the micro-annulus will continue until the pressure in the micro-annulus matches that of the fluid flowing through the bore of the pipeline. Thereafter, any rapid reduction of pressure in the bore will lead to an overpressure in the micro-annulus that will not equalise so quickly and could therefore cause the liner to collapse inwardly.

There is a need for effective equalisation of pressure between the micro-annulus and the bore to avoid liner collapse, but without exposing the inner surface of the pipe to excessive corrosion. Early attempts to meet that need are the subject WO 00/08368, in which vents extend from the micro-annulus through the wall of the host pipe, and WO 02/33298, in which vents instead extend through the liner to allow fluid to flow from the micro-annulus to the bore. This latter solution has since become conventional in the field of pipeline engineering.

Similarly, WO 2004/011840 discloses a pipe liner connector or 'liner bridge' for maintaining a substantially continuous lining between lined pipeline sections joined end-to-end. The connector comprises a tubular sleeve penetrated by vents for fluid communication between the micro-annulus and the bore of the conjoined pipe sections. US 6983766 discloses a valve mounted in a bore through a liner. The valve is supported by a housing comprising complementary threaded parts that extend into the bore and are screwed together from opposite sides of the liner. Whilst the resulting clamping effect allows firm location of the valve housing by compressing the liner, it does not ensure a fluid-tight interface that is sufficient to prevent leakage around the housing.

Among more remote prior art, GB 2115103 relates to grouting between a sewer pipe and a smaller diameter, plastics slip-lining pipe that is inserted into the sewer pipe for the purpose of repair. A valve for injecting grout extends through the lining pipe. As fluid tightness is not as stringent a requirement as in the field of the invention, the embodiments that are disclosed in GB 2115103 are unlikely to provide sufficient leak tightness against gas.

In yet more distant prior art, US 2010/0221995, US 2007/0222113 and JP 2006315725 provide examples of water-resistant air vents for automotive housings. These vents are designed in a context in which rapid manufacture is prioritised and without the constraints that apply for subsea pipelines, and in general terms are not suitable for use with liquids or in high-pressure environments.

In practical applications of the concept disclosed in the aforementioned WO 02/33298, the vent comprises a porous sintered titanium frit element that is retained frictionally in a surrounding tubular body. The body may, for example, be machined from polyether ether ketone (PEEK). Various material grades are available for the frit, based on a minimum pore size of from 0.2 µm to 100 µm.

Whilst WO 02/33298 suggests that the vent could be retained in the liner by gluing or fusing, in practice a vent is typically threadedly engaged within, or force-fitted into, a bore through the liner. It has been found that these methods of inserting the vent body into the liner can result in a leakage or permeation path at the interface between the vent and the liner.

More specifically, trials have revealed various practical problems with vents in accordance with WO 02/33298, each resulting in a damaged or defective vent. For example, the PEEK body of a vent has been observed to fail during insertion into the liner. Also, during use in simulated service conditions, the porous frit has been observed to be ejected from the vent body or the entire vent body including the frit has been observed to be ejected from the parent material of the liner.

A special challenge relates to a die-drawing process for inserting a plastics lining into a pipeline, in particular the process known in the art by the registered trade mark 'Swagelining' and described in WO 2020/225532. In the Swagelining process, a plastics liner pipe initially has an outer diameter that is greater than the inner diameter of a host pipe to be lined. To reduce its outer diameter to fit into the host pipe, the liner pipe is pulled through a distally-tapering annular swage die located near a proximal end of the host pipe. Where the wall of the liner pipe is penetrated by a vent, deformation of the liner pipe during die drawing creates potential leak paths around the vent and threatens the integrity of the vent itself.

In view of these problems, the invention aims to improve on conventional methods for manufacturing lined pipelines.

Against this background, the invention resides in a method of manufacturing a vent for a pipeline liner. The method comprises overmoulding a porous element such as a frit or sinter with a polymer body to form a vent in which the porous element extends across a through-passage formed in the body during overmoulding. For example, the polymer body may be of a thermoplastic material and so may be overmoulded onto the porous element when the thermoplastic is molten.

At least one internal flange may be formed in the through-passage during overmoulding, or a pair of such flanges may be formed in mutual opposition about the porous element. Such a flange or flanges may be positioned to restrain the porous element against movement along the through-passage and may have a central aperture that maintains fluid communication between the porous element and the through-passage.

When the polymer material is in a flowable state during overmoulding, a polymer material of the body can be engaged with a textured surface of the porous element. A molecular bond may be formed between the polymer body and the porous element. For example, the porous element could be a sinter of a polymer that forms a molecular bond with the polymer of the body.

A resilient insert may be interposed between the porous element and the body during overmoulding. Such an insert preferably embraces an edge of the porous element and exposes a central region of the porous element. The insert is suitably formed around the porous element in a preliminary overmoulding step. Thus, while a material of the insert is in a flowable state during overmoulding, that material may be engaged with a textured surface of the porous element. A molecular bond may also be formed between the insert and the polymer body and/or the porous element.

During overmoulding, the porous element is conveniently supported in a mould cavity clamped between opposed internal mould formations that define at least part of the through-passage.

The inventive concept extends to a method of manufacturing a pipeline liner, comprising inserting a vent made by the method of the invention into a wall of the liner. A molecular bond may be formed between the polymer body and the wall of the liner. Preferably, the body of the vent is fused with the wall of the liner upon or after insertion of the vent into the wall of the liner. For this purpose, interface surface regions of the body and/or the wall of the liner may be heated to a softening or melting temperature before or after inserting the vent into the wall of the liner. For example, a socket fusion welding process may be used to fuse the vent to the wall of the liner.

The liner may be inserted into a pipeline or a pipe joint after the vent has been inserted into the wall of the liner. The liner may be die-drawn after inserting the vent into the wall of the liner and before inserting the liner into the pipeline or pipe joint.

Correspondingly, the inventive concept embraces a vent for a pipeline liner, the vent comprising a porous element extending across, and in fluid communication with, a through-passage defined within an overmoulded polymer body that embeds the porous element. The vent may have at least one internal flange in the through-passage, the or each flange being positioned to restrain the porous element against movement along the through-passage and having a central aperture that maintains fluid communication between the porous element and the through-passage. There may be a pair of those internal flanges in mutual opposition about the porous element.

In some embodiments, the vent may be configured as a unidirectional valve. In that case, the vent may comprise a valve element that is operable by differential pressure to open and close the through-passage. Conveniently, the porous element may be positioned to restrain the valve element against movement along the through-passage, for example in abutment to the valve element.

The inventive concept also embraces a pipeline liner comprising at least one vent of the invention, and a lined pipeline or pipe joint comprising at least one liner of the invention.

In summary, the invention provides improved techniques for incorporating a vent into a plastics liner for pipelines used in hydrocarbon production. The invention enables efficient installation of vents in liners and high performance of vents once installed and in use. The invention addresses the problems of current designs of pipeline liner vents and enables their successful use in conjunction with the Swagelining method for installing a liner.

Various solutions are proposed within the inventive concept. One solution involves an overmoulded porous frit. This uses an insert moulding technique to encapsulate a porous titanium frit within an HDPE body, thus retaining and sealing the frit in a single operation. The resulting part is then socket fusion welded into an HDPE liner which has suitably been prepared by drilling a hole to accept the socket. Both parts are heated to above their melt point and then the socket is inserted into the liner to create a fused bond. Other material combinations can be employed but the best fusion is usually achieved by matching the socket material to the parent liner material.

The overmould technique provides a hermetic seal between the frit and the surrounding or embedding polymer. Also, the porosity of the frit generates surface roughness that enhances mechanical interlocking between the polymer and the frit. Both of these attributes prevent leak paths from appearing around the frit after a liner carrying the vent has been installed by the Swagelining technique. Additionally, socket fusion welding the valve component into the liner creates a fused bond between the liner and the socket. Again, this allows a liner carrying the vent to be installed by the Swagelining technique without the deformation of die drawing affecting the performance of the vent.

In another solution, an elastomeric material is first overmoulded around the frit to improve sealing around the circumference or periphery of the frit. The sealed frit is then overmoulded again, for example with HDPE, and the resulting component is then socket welded into the parent liner as before. The elastomeric material is chosen so that it bonds directly to the HDPE material during the second overmoulding step.

As before, overmoulding creates a seal between the frit and the surrounding material of the socket. An advantage of this arrangement is that the elastomeric material allows compliance for movement of the frit relative to the outer material of the socket and hence relative to the parent liner once the valve component is welded into place. This helps to preserve a constant seal around the frit during a Swagelining operation as the elastomeric material allows greater extension to be tolerated at that interface before the seal is broken.

Other solutions can employ a different combination of materials. For example, a titanium frit may be replaced by a porous high molecular weight polyethylene sinter that is directly overmoulded with HDPE to create a two-part composite component. As the high molecular weight polyethylene and HDPE are mutually compatible, an intimate molecular bond is formed at the interface between the two materials due to melt fusion. The composite part is then preferably socket fusion welded into a parent HDPE liner as before.

In this instance, the porous polymer sinter has flexibility that is similar to or slightly greater than that of the parent socket material. This also allows greater extension to be tolerated at the interface between the HDPE socket and the porous polymer sinter as the liner is die-drawn during installation.

Other materials and material combinations are possible. Again, however, it is optimal if both materials of the valve component, and preferably also the parent liner material, are of the same type or at least are compatible to the extent that a molecular bond is achieved between them during fusion.

The frits or sinters of the preceding solutions are bi-directional, allowing fluid to flow through the valve in both directions. However, a uni-directional arrangement is also possible, hence only allowing fluid to flow through the valve in one direction while substantially completely preventing flow in the opposite direction. In embodiments to be described, a valve element such as an elastomeric umbrella valve element totally blocks flow in one direction. A porous polymer or titanium plug supports the valve element to prevent the valve element being pushed through the centre of the socket under differential pressure. The assembly of the elastomeric valve element and the porous plug is housed in a socket that is welded into the parent liner. A small hole in the liner allows access to the elastomeric valve for high-pressure fluid.

Due to the one-way characteristic of the valve system, this solution ensures that only gas or vapour can permeate to the micro-annulus at the interface between the liner and host steel pipe. Specifically, gas or vapour can permeate through either the elastomeric valve element itself or the host liner material and accumulate in the micro-annulus. Conversely, no liquid is allowed to enter the micro-annulus. This reduces corrosion of the inner surface of the host pipe and so increases the life of the pipeline.

The porous plug that supports the elastomeric valve element allows gas or vapour to escape from the micro-annulus back into the central bore of the pipe whenever there is a pressure differential between the two regions. In this way, the valve mitigates the risk of liner collapse associated with permeated gases in hydrocarbon flowlines.

The moulding, fusion and welding steps described above for other solutions are also applicable to the one-way valve solution. Similarly, they accommodate deformation of the liner experienced during the die-drawing process without degradation of performance.

Embodiments of the invention implement a method to install an insert through the polymer liner of a pipeline, the method comprising: moulding a polymer socket around the insert; heating the polymer socket, and, locally, the liner above respective fuse points; and fusing the polymer socket through the liner. For example, a preliminary bore, which may be narrower than the diameter of the socket, may be drilled through the liner to receive the socket.

The insert may be a porous metallic, ceramic or polymer frit, for example of sintered metal such as titanium. The polymer socket may, for example, be of HDPE.

In a first step, an elastomeric seal may be installed or moulded on the insert, in which case the polymer socket may then be moulded on the seal.

The insert can be combined with a one-way valve, such as an umbrella valve, before moulding the polymer socket around the insert and/or the valve.

Thus, the invention involves a method of manufacturing a vent for a pipeline liner that comprises overmoulding a porous element in a polymer body. This produces a vent in which the element extends across, and is in fluid communication with, a through-passage formed in the body during overmoulding. The element may be supported in a mould cavity clamped between opposed internal mould formations that define at least part of the through-passage.

The integrity of the vent and of the interface between the vent and the liner is maintained during deformation of the liner, for example due to die-drawing the liner for insertion into a pipe joint. Thus, the porous element is mechanically engaged with the surrounding body as flowable material of the body is absorbed into the element during overmoulding. Internal flanges also restrain the element against movement along the through-passage. The vent is also fused with the liner by heating interface regions to a softening or melting temperature before inserting the vent into a wall of the liner.

In order that the invention may be more readily understood, reference will now be made by way of example to the accompanying drawings in which:
Figure 1 is a schematic side view in partial longitudinal section of a die-drawing process for lining a pipe joint in accordance with the invention;
Figure 2 corresponds to Figure 1 but shows reversion of the liner pipe after longitudinal tension has been relaxed;
Figure 3 is a schematic side view of a vent of the invention aligned with a complementary hole in a pipeline liner;
Figure 4 is a schematic side view of the vent of Figure 3, in longitudinal section, showing a porous frit within the vent;
Figure 5 is a side view of a die for overmoulding a polymer body of the vent around the frit shown in Figure 4;
Figure 6 corresponds to Figure 5 but shows the die when closed and ready for injection moulding the polymer body around the frit;
Figure 7 is side view of a heating tool for use when inserting the vent shown in Figures 3 and 4 into the hole in the liner shown in Figure 3;
Figures 8 and 9 are longitudinal sectional views of the heating tool of Figure 7 in use;
Figures 10 and 11 are longitudinal sectional views of the vent being inserted into the hole in the liner after use of the heating tool;
Figure 12 is a schematic side view of a variant of the vent, in longitudinal section, showing a resilient insert moulded around the frit;
Figures 13 and 14 are schematic side view of a mould forming the resilient insert of Figure 12 around the frit in a preliminary overmoulding step;
Figure 15 is a schematic side view of a further variant of the vent, in longitudinal section, comprising an overmoulded polymer sinter; and
Figures 16 and 17 are longitudinal sectional views of a further variant of the vent.

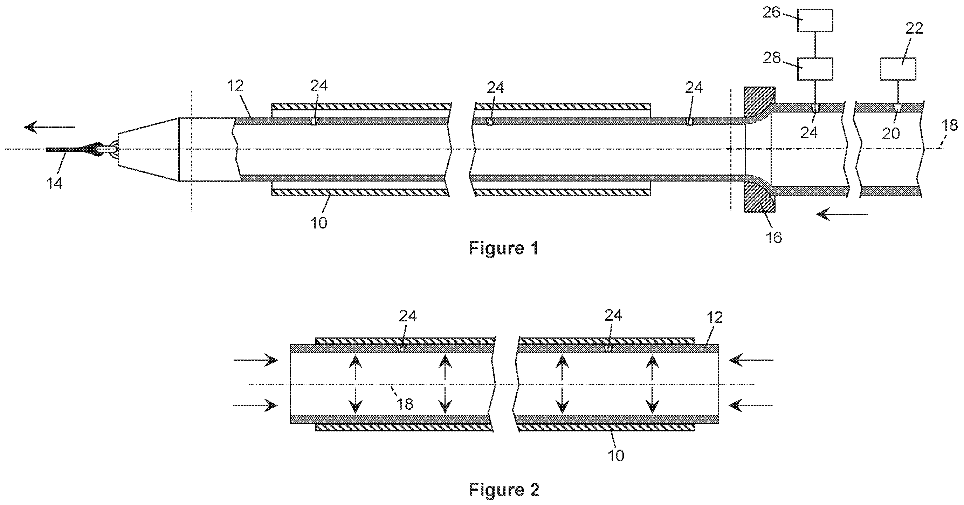

Figures 1 and 2 show the invention in the context of the Swagelining technique for lining an outer host pipe in the form of a steel pipe joint 10 by die drawing a polymer liner pipe 12 along the interior of the pipe joint 10. The liner pipe 12 is pulled, from right to left as illustrated, by a draw line 14 that is attached to a tapered distal end of the liner pipe 12. The draw line 14 is tensioned by a conventional jack system, which is not shown.

As shown to the right side of Figure 1, the liner pipe 12 initially has an outer diameter that is greater than the inner diameter of the pipe joint 10. Then, the liner pipe 12 is pulled through an annular swage die 16 that is spaced longitudinally or upstream from a proximal end of the pipe joint 10 and that tapers in the downstream or pulling direction. By causing radially-inward elastic deformation or contraction of the liner pipe 12, the swage die 16 reduces the outer diameter of the liner pipe 12 to less than the inner diameter of the pipe joint 10. The liner pipe 12 lengthens as its outer diameter reduces.

In this narrowed and elongated swaged condition, the liner pipe 12 is pulled telescopically through the pipe joint 10 while longitudinal tension is maintained in the liner pipe 12 between the draw line 14 and the swage die 16. The liner pipe 12 and the pipe joint 10 are substantially concentric about a common central longitudinal axis 18.

Pulling continues until a distal end portion of the liner pipe 12 protrudes from a distal end of the pipe joint 10 as shown in Figure 1. A proximal end portion of the liner pipe 12 is similarly left protruding between the proximal end of the pipe joint 10 and the swage die 16 as also shown in Figure 1. The outer extremities of the end portions of the liner pipe 12 are shown in Figure 1 in dashed lines orthogonal to the central longitudinal axis 18. The liner pipe 12 is eventually severed at those locations.

When the liner pipe 12 is in the correct longitudinal position with respect to the pipe joint 10, tension in the draw line 14 is released. This initiates a reversion process that is shown completed in Figure 2. During reversion, the elasticity of the polymer liner pipe 12 material draws most of the protruding end portions of the liner pipe 12 into the pipe joint 10 as the liner pipe 12 expands radially outwardly to press against the interior of the pipe joint 10. A micro-annulus is defined at the interface between the pipe joint 10 and the liner pipe 12.

When reversion is complete, the ends of the liner pipe 12 are machined back to, or into, the corresponding ends of the pipe joint 10. For example, the ends of the liner pipe 12 may be machined to create sockets to receive polymer liner bridges whose outer shape complements the sockets.

In accordance with the invention, longitudinally spaced holes 20 are drilled though a wall of the liner pipe 12 at process 22. Then, vents 24 manufactured at process 26 are inserted into respective holes 20 at process 28.

As the drilling and insertion processes 22 and 28 are performed upstream of the swage die 16, the vents 24 must pass through the swage die 16 together with the surrounding liner pipe 12. The ensuing deformation of the liner pipe 12 creates challenges not only for the integrity of the interface between each vent 24 and the liner pipe 12 but also for the integrity of the vents 24 themselves. The invention addresses those challenges by providing more robust vents 24 and by creating a more robust interface between each vent 24 and the surrounding material of the liner pipe 12.

For clarity, references to 'inner', 'outer', 'inward' or 'outward' in the description that follows relate to radial directions with respect to the central longitudinal axis 18 of the liner pipe 12 shown in Figures 1 and 2.

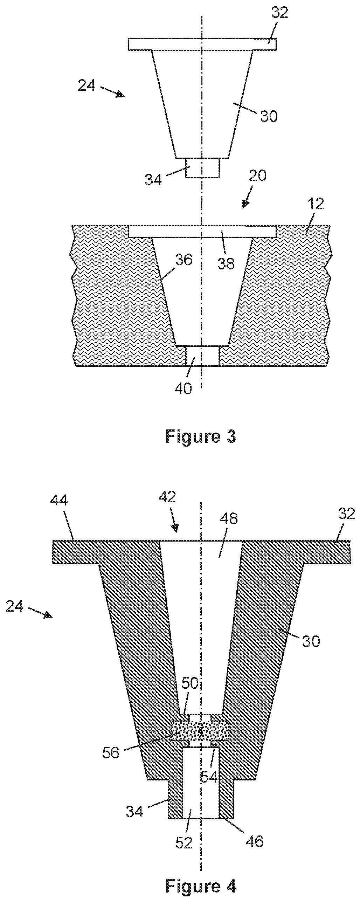

A vent 24 of the invention is shown in Figure 3 in alignment with a hole 20 bored through the liner pipe 12. It will be apparent that the male profile of the vent 24 complements the female profile of the hole 20. Specifically, the vent 24 is rotationally symmetrical and comprises a generally frusto-conical body 30 that tapers inwardly. A flange 32 surrounds the outer end of the body 30 and a narrow spigot 34 extends from the inner end of the body 30. Correspondingly, the hole 20 has a wall 36 that tapers inwardly from an outer circumferential rebate 38 that receives the flange 32 of the vent 24 to an inner bore 40 that receives the spigot 34 of the vent 24.

The body 30 of the vent 24 and/or the wall 36 of the hole 20 are plain in this example but could instead be contoured with inter-engagement formations such as circumferential ridges.

Figure 4 shows internal features of the vent 24 of Figure 3. A through-passage 42 extends the full length of the vent 24 between its outer end 44 and its inner end 46. An outer portion 48 of the through-passage 42 extends inwardly from the outer end 44 to an outer flange 50. In this example, the outer portion 48 tapers inwardly. Conversely, an inner portion 52 of the through-passage 42 extends outwardly from the inner end 46 to an inner flange 54. The inner portion 52 extends co-axially through the spigot 34.

It will be apparent that the outer and inner flanges 50, 54 are moulded integrally with the body 30. The flange 32 and the spigot 34 at the outer and inner ends 44, 46 of the vent 24 are also moulded integrally with the body 30.

A porous frit 56, for example of sintered titanium, lies across the through-passage 42, sandwiched between and retained by the flanges 50, 54. The body 30 of the vent 24 may be regarded as a socket that receives the frit 56.

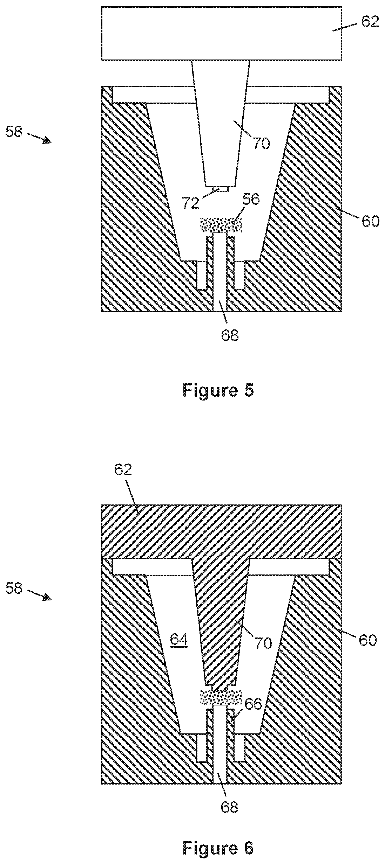

The frit 56 is sealed around its periphery to the embracing flanges 50, 54 and to the encircling side wall of the through-passage 42 between the flanges 50, 54. In accordance with the invention, this intimate and strong engagement between the frit 56 and the body 30 of the vent 24 is assured by an overmoulding process that will now be described with reference to Figures 5 and 6 of the drawings. This corresponds to the process 26 for manufacturing vents 24 as shown in Figure 1 .

Figures 5 and 6 show, schematically, a die 58 for injection-moulding the vent 24 to incorporate the frit 56 by overmoulding. The die 58 comprises a female part 60 and a male part 62 for forming respective portions of the vent 24. When brought together as shown in Figure 6, the female part 60 and the male part 62 of the die 58 define a mould cavity 64 between them in which the body 30 is formed, for example from HDPE, together with the aforementioned features that are moulded integrally with the body 30.

The female part 60 of the die 58 comprises a hollow pillar formation 66 that forms the inner portion 52 of the through-passage 42 within the spigot 34. The outer end of the pillar formation 66 is shaped to define an inner side of the inner flange 54.

The pillar formation 66 has a central bore that receives a pin 68. The pin 68 has a flat outer end that supports the frit 56. The pin 68 protrudes outwardly beyond the outer end of the pillar formation 66 to define a central aperture in the inner flange 54, effecting fluid communication with the frit 56.

Conversely, the male part 62 of the die 58 comprises an inwardly-tapering central projection 70 that forms the outer portion 48 of the through-passage 42. The inner end of the projection is shaped to define an outer side of the outer flange 50. A protrusion 72 extends inwardly beyond the inner end of the projection 70 to define a central aperture in the outer flange 50, effecting fluid communication with the frit 56.

When the parts 60, 62 of the die 58 are brought together as shown in Figure 6, the protrusion 72 at the inner end of the projection 70 opposes the outer end of the pin 68 to sandwich and clamp the frit 56 between them, thus supporting the frit 56 within the mould cavity 64. Molten thermoplastic polymer is then injected into the mould cavity 64 under elevated pressure to embed the frit 56 followed by cooling to form the vent 24, which is removed from the mould cavity 64 when the parts 60, 62 of the die 58 are disassembled.

Thus, the pillar formation 66, the pin 68, the projection 70 and the protrusion 72 serve as internal mould formations that support the frit 56 within the mould cavity 64. Those internal mould formations also define the through-passage 42 and the shape of the flanges 50, 54, including the central apertures in the flanges 50, 54 that maintain fluid communication along the through-passage 42 via the frit 56.

It will be apparent that by virtue of its porosity and rough texture, the outer surface of the frit 56 will admit, engage with or absorb some of the injected molten polymer at their mutual interface. This enhances sealing around the frit 56 and mechanical engagement between the frit 56 and the polymer that embeds the frit 56. In conjunction with the flanges 50, 54 that embrace the frit 56, the result is extremely strong resistance to displacement or loosening of the frit 56 relative to the surrounding body 30 of the vent 24, even under high stresses caused by traversing the swaging die 16 shown in Figure 1.

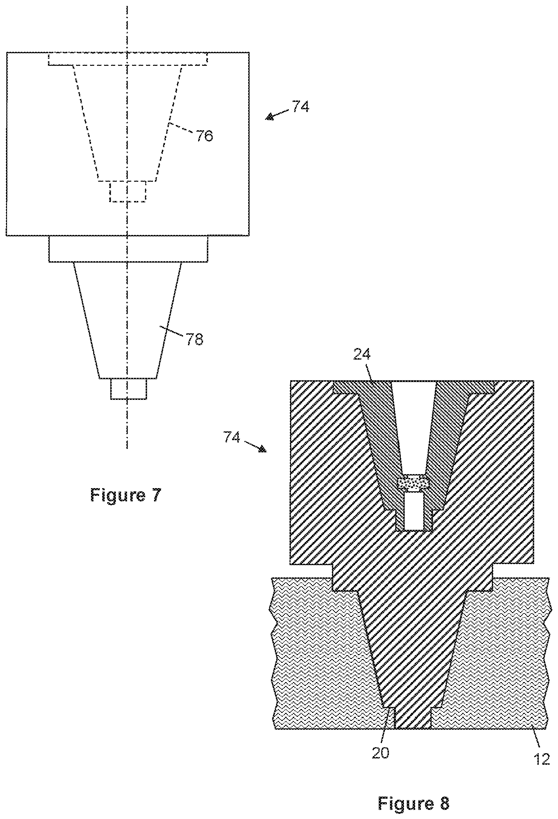

The integrity of the vent 24 thus ensured, it is also necessary to ensure the integrity of the interface between the vent 24 and the liner pipe 12. Reference is now made to Figures 7 to 11 in this respect, which correspond to the process 28 for inserting vents 24 shown in Figure 1. The process 28 preferably employs a socket fusion welding technique as will now be described.

Figures 7, 8 and 9 show a heating tool 74 that is arranged to heat and hence soften or melt the external surface of the vent 24 and the internal surface of the hole 20 in the liner pipe 12. Conveniently, a single heating tool 74 can perform both functions simultaneously as shown. However, it would be possible instead to use separate heating tools to heat the external surface of the vent 24 and the internal surface of the hole 20.

As best appreciated in Figure 7, the heating tool 74 has a recess 76 that emulates the internal shape of the hole 20, thus complementing the external shape of the vent 24. The heating tool 74 also has a boss 78 that emulates the external shape of the vent 24, thus complementing the recess 76 and the internal shape of the hole 20.

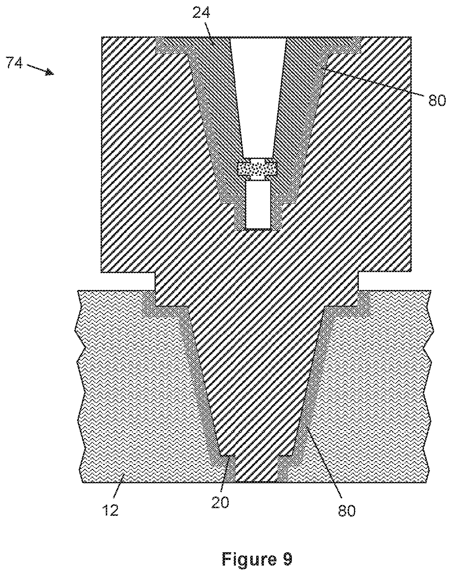

Figure 8 shows a vent 24 placed in the recess 76 of the heating tool 74, and the boss 78 of the heating tool 74 inserted into a hole 20 in a liner pipe 12. Heat applied locally by the heating tool 74 thereby softens or melts the adjoining external surface of the vent 24 and the internal surface of the hole 20. As shown in Figure 9, this local heating creates a shallow softened or molten layer 80 extending just beneath each of those surfaces, but not so deep as to weaken the heated parts significantly.

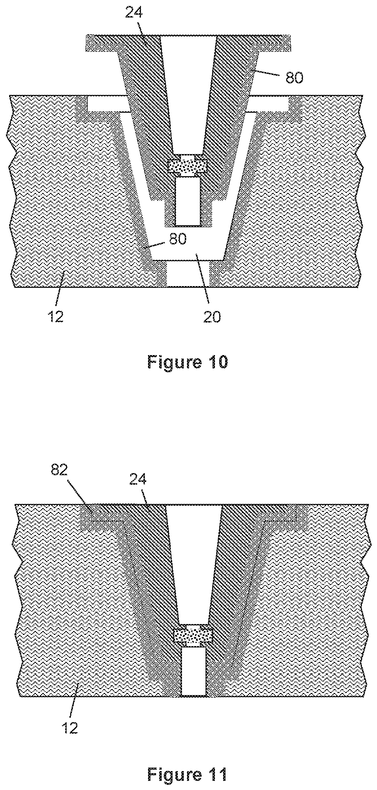

Next, the boss 78 of the heating tool 74 is removed from the hole 20 and the vent 24 is removed from recess 76 of the heating tool 74. Then, as shown in Figures 10 and 11, while the layers 80 remain softened or molten, the vent 24 is forced into the hole 20. The softened or molten layers 80 thereby mingle, fuse and bond at the interface between the vent 24 and the hole 20 to form a welded join 82 between the vent 24 and the liner pipe 12.

The remaining drawings show variants of the vent 24 whose internal structure differs from the vent 24 of Figures 3 and 4. However, all of these variants can be fixed in a hole 20 in a liner pipe 12 by a socket fusion welding process like that described with reference to Figures 7 to 11. Like numerals are used for like features.

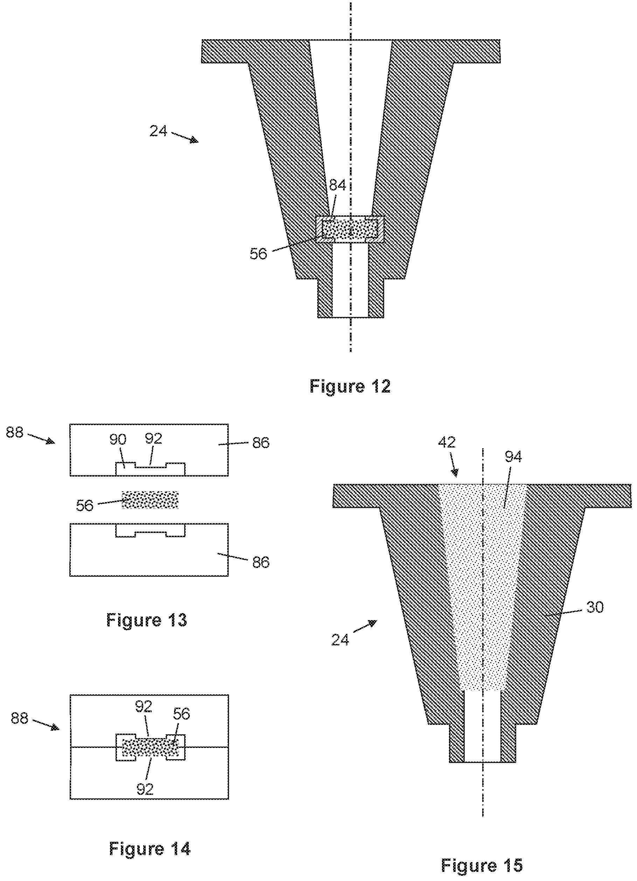

Turning next to Figures 12 to 14, these drawings show a variant of the vent 24 in which an elastomeric insert 84 is interposed between the frit 56 and the surrounding overmoulded body 30. The relatively flexible insert 84 allows relative movement between the relatively rigid body 30 and the still more rigid frit 56. This resists fracture at the interface between the body 30 and the frit 56 as the liner pipe 12 and the body 30 undergo deflection and deformation, especially during die drawing as shown in Figure 1.

Conveniently, the elastomeric insert 84 is overmoulded around the frit 56 in a first overmoulding operation before the combination of the frit 56 and the insert 84 is overmoulded in a second overmoulding operation. The second overmoulding operation corresponds to the overmoulding operation described above with reference to Figures 5 and 6, with the exception that the combination of the frit 56 and the insert 84 is overmoulded as opposed to the frit 56 in isolation.

The first overmoulding operation is illustrated in Figures 13 and 14, where the frit 56 is clamped between two halves 86 of a die 88 in which the insert 84 is then formed by injection moulding.

The die halves 86 have internal formations in mirrored relation, each of those formations comprising an annular channel 90 surrounding a central stud 92. The opposed studs 92 bear against a central region of the frit 56 to clamp the frit 56 between them when the die halves 86 are brought together.

Outboard of the studs 92, clearance between the frit 56 and the channels 90 defines a mould cavity into which material of the insert 84 is injected, while liquid. This creates an overmoulded C-section elastomeric ring around the studs 92 that embraces the circumferential edge of the frit 56. Conversely, the opposed studs 92 define a central aperture in the insert 84 effecting fluid communication with the frit 56, as can be seen in Figure 12. As before, the porosity and rough texture of the frit 56 will admit, engage with or absorb the injected flowable elastomeric material at the interface with the insert 84.

Moving on to Figure 15, this shows another variant of the vent 24 in which the titanium frit 56 is replaced by a porous high molecular weight polyethylene sinter 94. In this example, the sinter 94 is directly overmoulded with a body 30 of polymer to create a two-part composite component, although an intermediate elastomeric layer could be formed around the sinter 94 in a preliminary overmoulding step if desired.

It will be apparent that the sinter 94 extends most of the length of the through-passage 42 in the vent 24 and has an inward taper that matches the outer portion of the through-passage 42. This maximises the interface area between the sinter 94 and the surrounding body 30, improving strength due to molecular bonding and mechanical engagement. In this respect, again, the porosity and rough texture of the outer surface of the sinter 94 will admit, engage with or absorb injected molten polymer at the interface with the body 30.

Preferably, the material of the sinter 94 and the material of the overmoulded body 30 are mutually compatible so that an intimate molecular bond is formed at the interface between the two materials due to melt fusion. Similarly, any intermediate elastomeric layer is preferably compatible with both the sinter 94 and the material of the overmoulded body 30.

To facilitate extension at the interface between the sinter 94 and the body 30 during die-drawing of the liner pipe 12, the sinter 94 suitably has no less flexibility than the overmoulded body 30.

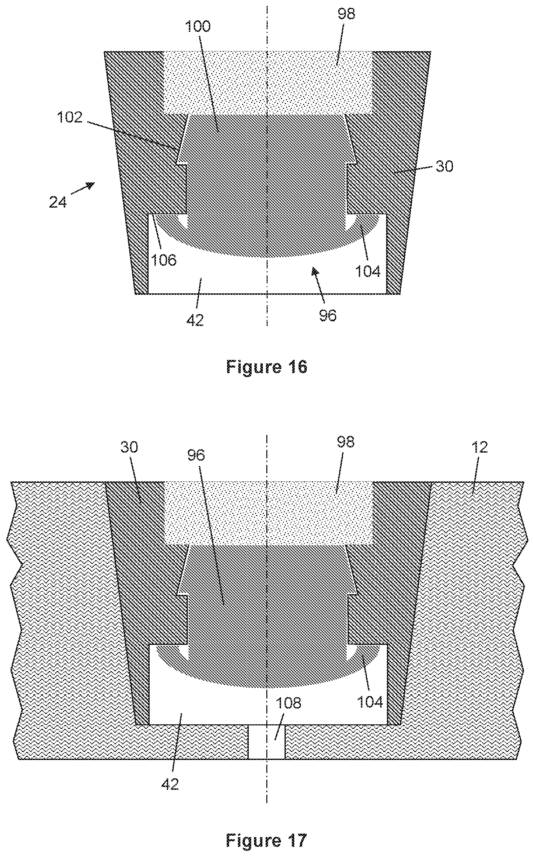

Turning finally to Figures 16 and 17, these drawings show a variant of a vent 24 comprising a uni-directional valve. Here, the vent 24 comprises a valve element 96 that extends across the through-passage 42 to allow fluid to flow through the vent 24 in an inward direction while blocking fluid flow in the outward direction.

The body 30 is overmoulded around a porous polymer or metallic sinter or plug 98 that extends across the through-passage 42 on an outer side of the valve element 96. Again, advantageously, there is mechanical engagement and possibly also molecular bonding between the plug 98 and the overmoulded body 30. The porous plug 98 thereby supports the valve element 96 to prevent the valve element 96 being pushed outwardly along the through-passage 42 under differential pressure.

In this example, the valve element 96 is an elastomeric umbrella valve element that has an enlarged outer end 100 snap-fitted into a retaining formation 102 of the body 30, and a shallow dome-shaped inner end 104 whose apex faces inwardly. The body 30 also defines an internal shoulder 106 that is opposed to the inner end of the valve element 96. The inner end 104 of the valve element 96 deflects resiliently away from the shoulder 106 to admit inward fluid flow but seats against the shoulder 106 to block outward fluid flow.

A small hole 108 in the inner side of the liner pipe 12 effects fluid communication with the through-passage 42 of the vent 24, and hence with the plug 98 around or through the valve element 96. Specifically, in use, only gas or vapour can permeate outwardly through the valve element 96 and the plug 98, or through the liner pipe 12 itself, to accumulate in the micro-annulus outside the liner pipe 12. Outward flow of liquid is blocked by the valve element 96. Conversely, gas or vapour can escape inwardly from the micro-annulus back through the plug 98 and past the valve element 96 whenever fluid pressure on the outer side of the vent 24 exceeds fluid pressure on the inner side of the vent 24.

Many other variations are possible within the inventive concept. For example, the overmoulded polymer body of a vent could be of a thermoset material that is injection moulded while flowable before curing as opposed to being injected while molten before cooling. In that case, a frit, sinter, plug or resilient insert overmoulded within that body could be of a polymer that is compatible with that thermoset material. However, a thermoplastic polymer is preferred for the body of the vent because it facilitates compatibility and socket fusion welding with a thermoplastic liner.

Other variations of the fusion bonding process described with reference to Figures 7, 8 and 9 can be realised to assemble the vent 24 and the liner 12. For example, either or both the vent 24 and the liner 12 can be separately pre-heated by torches or heaters. In another approach, ferromagnetic particles or carbon-based materials, such as carbon fibres, carbon nanotubes or graphene platelets, can be mixed with the material of the body 30 of the vent 24. On being activated by electrical power or by induction, such particles or materials can heat the vent 24 when it is brought into contact with the liner 12, or before.

## Claims

1. A method of manufacturing a vent (24) for a pipeline liner (12), the method comprising overmoulding a porous element (56, 94, 98) with a polymer body (30) to form a vent (24) in which the porous element (56, 94, 98) extends across a through-passage (42) formed in the body (30) during overmoulding.

2. The method of Claim 1, comprising forming at least one internal flange (50, 54) in the through-passage (42) during overmoulding, the flange (50, 54) being positioned to restrain the porous element (56, 94, 98) against movement along the through-passage (42) and having a central aperture that maintains fluid communication between the porous element (56, 94, 98) and the through-passage (42).

3. The method of Claim 2, comprising forming a pair of said internal flanges (50, 54) in mutual opposition about the porous element (56, 94, 98).

4. The method of any preceding claim, comprising engaging a polymer material of the body (30) with a textured surface of the porous element (56, 94, 98), while the polymer material is in a flowable state during overmoulding.

5. The method of any preceding claim, comprising forming a molecular bond between the polymer body (30) and the porous element (56, 94, 98).

6. The method of any of Claims 1 to 3, comprising interposing a resilient insert (84) between the porous element (56, 94, 98) and the body (30) during overmoulding.

7. The method of Claim 6, wherein the insert (84) embraces an edge of the porous element (56, 94, 98) and exposes a central region of the porous element (56, 94, 98).

8. The method of Claim 6 or Claim 7, comprising forming the insert (84) around the porous element (56, 94, 98) in a preliminary overmoulding step.

9. The method of Claim 8, comprising engaging a material of the insert (84), while in a flowable state during overmoulding, with a textured surface of the porous element (56, 94, 98).

10. The method of any of Claims 6 to 9, comprising forming a molecular bond between the insert (84) and the polymer body (30) and/or the porous element (56, 94, 98).

11. The method of any preceding claim, wherein the polymer body (30) is a thermoplastic and is overmoulded onto the porous element (56, 94, 98) when the thermoplastic is molten.

12. The method of Claim 1 or Claim 2, or of any of Claims 4, 5 or 11 when not dependent on Claim 3 or Claim 6, wherein the porous element (56, 94, 98) is a frit or sinter.

13. The method of Claim 12, wherein the porous element is a sinter (94, 98) of a polymer that forms a molecular bond with the polymer of the body (30).

14. The method of any preceding claim, comprising supporting the porous element (56, 94, 98) in a mould cavity (64) clamped between opposed internal mould formations (66, 68, 70, 72) that define at least part of the through-passage (42).

15. A method of manufacturing a pipeline liner (12), comprising inserting a vent (24) manufactured by the method of any of Claims 1 to 14 into a wall of the liner (12).

16. The method of Claim 15, comprising fusing the body (30) of the vent (24) with the wall of the liner (12) upon insertion of the vent (24) into the wall of the liner (12).

17. The method of Claim 16, comprising heating interface surface regions of the body (30) and the wall of the liner (12) to a softening or melting temperature before inserting the vent (24) into the wall of the liner (12).

18. The method of Claim 17, comprising socket fusion welding the vent (24) to the wall of the liner (12).

19. The method of any of Claims 15 to 18, comprising forming a molecular bond between the polymer body (30) and the wall of the liner (12).

20. The method of any of Claims 15 to 19, further comprising inserting the liner (12) into a pipeline or a pipe joint (10) after inserting the vent (24) into the wall of the liner (12).

21. The method of Claim 20, comprising die-drawing the liner (12) after inserting the vent (24) into the wall of the liner (12) and before inserting the liner (12) into the pipeline or pipe joint (10).

22. A vent (24) for a pipeline liner (12), the vent (24) comprising a porous element (56, 94, 98) extending across, and in fluid communication with, a through-passage (42) defined within an overmoulded polymer body (30) that embeds the porous element (56, 94, 98).

23. The vent (24) of Claim 22, comprising at least one internal flange (50, 54) in the through-passage (42), the or each flange (50, 54) being positioned to restrain the porous element (56, 94, 98) against movement along the through-passage (42) and having a central aperture that maintains fluid communication between the porous element (56, 94, 98) and the through-passage (42).

24. The vent (24) of Claim 23, comprising a pair of said internal flanges (50, 54) in mutual opposition about the porous element (56, 94, 98).

25. The vent (24) of any of Claims 22 to 24, wherein polymer material of the body (30) is absorbed into the porous element (56, 94, 98).

26. The vent (24) of any of Claims 22 to 25, comprising a molecular bond between the polymer body (30) and the porous element (56, 94, 98).

27. The vent (24) of any of Claims 22 to 24, comprising a resilient insert (84) interposed between the porous element (56, 94, 98) and the body (30).

28. The vent (24) of Claim 27, wherein the insert (84) embraces an edge of the porous element (56, 94, 98) and exposes a central region of the porous element (56, 94, 98).

29. The vent (24) of Claim 27 or Claim 28, wherein the insert (84) is overmoulded on the porous element (56, 94, 98).

30. The vent (24) of any of Claims 27 to 29, wherein material of the insert (84) is absorbed into the porous element (56, 94, 98).

31. The vent (24) of any of Claims 27 to 30, comprising a molecular bond between the insert (84) and the porous element (56, 94, 98).

32. The vent (24) of any of Claims 22 to 31, wherein the polymer body (30) is of a thermoplastic material.

33. The vent (24) of Claim 22 or Claim 23, or of any of Claims 25, 26 or 32 when not dependent on Claim 24 or Claim 27, wherein the porous element (56, 94, 98) is a frit or sinter.

34. The vent (24) of Claim 33, wherein the porous element is a sinter (94, 98) of a polymer that is joined to the polymer of the body (30) by a molecular bond.

35. The vent (24) of any of Claims 22 to 34, configured as a unidirectional valve and comprising a valve element (96) that is operable by differential pressure to open and close the through-passage (42).

36. The vent (24) of Claim 35, wherein the porous element (56, 94, 98) is positioned to restrain the valve element (96) against movement along the through-passage (42).

37. A pipeline liner (12) comprising at least one vent (24) of any of Claims 22 to 36.

38. The liner (12) of Claim 37, wherein the body (30) of the or each vent (24) is fused with a wall of the liner (12).

39. A lined pipeline or pipe joint (10) comprising at least one liner (12) of Claim 37 or Claim 38.

## Patentansprüche

1. Verfahren zum Herstellen einer Entlüftungsvorrichtung (24) für eine Rohrleitungsauskleidung (12), wobei das Verfahren das Umspritzen eines porösen Elements (56, 94, 98) mit einem Polymerkörper (30) umfasst, um eine Entlüftungsvorrichtung (24) zu bilden, in der sich das poröse Element (56, 94, 98) über einen während des Umspritzens in dem Körper (30) gebildeten Durchlass (42) hinweg erstreckt.

2. Verfahren nach Anspruch 1, umfassend das Bilden mindestens eines inwendigen Flanschs (50, 54) in dem Durchlass (42) während des Umspritzens, wobei der Flansch (50, 54) dazu positioniert ist, das poröse Element (56, 94, 98) gegen Bewegung entlang des Durchlasses (42) festzuhalten, und eine mittige Öffnung aufweist, die eine Fluidverbindung zwischen dem porösen Element (56, 94, 98) und dem Durchlass (42) aufrechterhält.

3. Verfahren nach Anspruch 2, umfassend das Bilden eines Paars der inwendigen Flansche (50, 54) in gegenseitiger Gegenüberstellung um das poröse Element (56, 94, 98).

4. Verfahren nach einem der vorangehenden Ansprüche, umfassend das Ineingriffbringen eines Polymermaterials des Körpers (30) mit einer texturierten Oberfläche des porösen Elements (56, 94, 98), während sich das Polymermaterial während des Umspritzens in einem fließfähigen Zustand befindet.

5. Verfahren nach einem der vorangehenden Ansprüche, umfassend das Bilden einer Molekülbindung zwischen dem Polymerkörper (30) und dem porösen Element (56, 94, 98).

6. Verfahren nach einem der Ansprüche 1 bis 3, umfassend das Einfügen eines elastischen Einsatzes (84) zwischen dem porösen Element (56, 94, 98) und dem Körper (30) während des Umspritzens.

7. Verfahren nach Anspruch 6, wobei der Einsatz (84) eine Kante des porösen Elements (56, 94, 98) umschließt und einen mittigen Bereich des porösen Elements (56, 94, 98) freilegt.

8. Verfahren nach Anspruch 6 oder Anspruch 7, umfassend das Bilden des Einsatzes (84) um das poröse Element (56, 94, 98) in einem vorausgehenden Umspritzschritt.

9. Verfahren nach Anspruch 8, umfassend das Ineingriffbringen eines Materials des Einsatzes (84), während es sich während des Umspritzens in einem fließfähigen Zustand befindet, mit einer texturierten Oberfläche des porösen Elements (56, 94, 98).

10. Verfahren nach einem der Ansprüche 6 bis 9, umfassend das Bilden einer Molekülbindung zwischen dem Einsatz (84) und dem Polymerkörper (30) und/oder dem porösen Element (56, 94, 98).

11. Verfahren nach einem der vorangehenden Ansprüche, wobei der Polymerkörper (30) ein Thermoplast ist und das poröse Element (56, 94, 98) damit umspritzt wird, wenn der Thermoplast geschmolzen ist.

12. Verfahren nach Anspruch 1 oder Anspruch 2 oder einem der Ansprüche 4, 5 oder 11, wenn nicht von Anspruch 3 oder Anspruch 6 abhängig, wobei das poröse Element (56, 94, 98) eine Fritte oder ein Sinter ist.

13. Verfahren nach Anspruch 12, wobei das poröse Element ein Sinter (94, 98) eines Polymers ist, das mit dem Polymer des Körpers (30) eine Molekülbindung bildet.

14. Verfahren nach einem der vorangehenden Ansprüche, umfassend das Halten des porösen Elements (56, 94, 98) in einer Formwerkzeughöhlung (64), sodass es zwischen gegenüberliegenden inwendigen Formwerkzeuggebilden (66, 68, 70, 72) geklemmt ist, die mindestens einen Teil des Durchlasses (42) definieren.

15. Verfahren zum Herstellen einer Rohrleitungsauskleidung (12), umfassend das Einsetzen einer mit dem Verfahren nach einem der Ansprüche 1 bis 14 hergestellten Entlüftungsvorrichtung (24) in eine Wand der Auskleidung (12).

16. Verfahren nach Anspruch 15, umfassend das Verschmelzen des Körpers (30) der Entlüftungsvorrichtung (24) mit der Wand der Auskleidung (12) beim Einsetzen der Entlüftungsvorrichtung (24) in die Wand der Auskleidung (12).

17. Verfahren nach Anspruch 16, umfassend das Erwärmen von Berührungsflächenbereichen des Körpers (30) und der Wand der Auskleidung (12) auf eine Erweichungs- oder Schmelztemperatur vor dem Einsetzen der Entlüftungsvorrichtung (24) in die Wand der Auskleidung (12).

18. Verfahren nach Anspruch 17, umfassend das Muffenverschweißen der Entlüftungsvorrichtung (24) mit der Wand der Auskleidung (12).

19. Verfahren nach einem der Ansprüche 15 bis 18, umfassend das Bilden einer Molekülbindung zwischen dem Polymerkörper (30) und der Wand der Auskleidung (12).

20. Verfahren nach einem der Ansprüche 15 bis 19, ferner umfassend das Einsetzen der Auskleidung (12) in eine Rohrleitung oder eine Rohrverbindung (10) nach dem Einsetzen der Entlüftungsvorrichtung (24) in die Wand der Auskleidung (12).

21. Verfahren nach Anspruch 20, umfassen das Ziehen der Auskleidung (12) durch eine Matrize nach dem Einsetzen der Entlüftungsvorrichtung (24) in die Wand der Auskleidung (12) und vor dem Einsetzen der Auskleidung (12) in die Rohrleitung oder die Rohrverbindung (10).

22. Entlüftungsvorrichtung (24) für eine Rohrleitungsauskleidung (12), wobei die Entlüftungsvorrichtung (24) ein poröses Element (56, 94, 98) umfasst, das sich über einen in einem umspritzten Polymerkörper (30), der das poröse Element (56, 94, 98) einbettet, definierten Durchlass (42) hinweg erstreckt und damit in Fluidverbindung steht.

23. Entlüftungsvorrichtung (24) nach Anspruch 22, umfassend mindestens einen inwendigen Flansch (50, 54) in dem Durchlass (42), wobei der oder jeder Flansch (50, 54) dazu positioniert ist, das poröse Element (56, 94, 98) gegen Bewegung entlang des Durchlasses (42) festzuhalten, und eine mittige Öffnung aufweist, die eine Fluidverbindung zwischen dem porösen Element (56, 94, 98) und dem Durchlass (42) aufrechterhält.

24. Entlüftungsvorrichtung (24) nach Anspruch 23, umfassend ein Paar der inwendigen Flansche (50, 54) in gegenseitiger Gegenüberstellung um das poröse Element (56, 94, 98).

25. Entlüftungsvorrichtung (24) nach einem der Ansprüche 22 bis 24, wobei Polymermaterial des Körpers (30) in dem porösen Element (56, 94, 98) absorbiert ist.

26. Entlüftungsvorrichtung (24) nach einem der Ansprüche 22 bis 25, umfassend eine Molekülbindung zwischen dem Polymerkörper (30) und dem porösen Element (56, 94, 98).

27. Entlüftungsvorrichtung (24) nach einem der Ansprüche 22 bis 24, umfassend einen elastischen Einsatz (84), der zwischen dem porösen Element (56, 94, 98) und dem Polymerkörper (30) eingefügt ist.

28. Entlüftungsvorrichtung (24) nach Anspruch 27, wobei der Einsatz (84) eine Kante des porösen Elements (56, 94, 98) umschließt und einen mittigen Bereich des porösen Elements (56, 94, 98) freilegt.

29. Entlüftungsvorrichtung (24) nach Anspruch 27 oder Anspruch 28, wobei das poröse Element (56, 94, 98) mit dem Einsatz (84) umspritzt ist.

30. Entlüftungsvorrichtung (24) nach einem der Ansprüche 27 bis 29, wobei Material des Einsatzes (84) in dem porösen Element (56, 94, 98) absorbiert ist.

31. Entlüftungsvorrichtung (24) nach einem der Ansprüche 27 bis 30, umfassend eine Molekülbindung zwischen dem Einsatz (84) und dem porösen Element (56, 94, 98).

32. Entlüftungsvorrichtung (24) nach einem der Ansprüche 22 bis 31, wobei der Polymerkörper (30) aus einem thermoplastischen Material ist.

33. Entlüftungsvorrichtung (24) nach Anspruch 22 oder Anspruch 23 oder einem der Ansprüche 25, 26 oder 32, wenn nicht von Anspruch 24 oder Anspruch 27 abhängig, wobei das poröse Element (56, 94, 98) eine Fritte oder ein Sinter ist.

34. Entlüftungsvorrichtung (24) nach Anspruch 33, wobei das poröse Element ein Sinter (94, 98) eines Polymers ist, das durch eine Molekülbindung mit dem Polymer des Körpers (30) verbunden ist.

35. Entlüftungsvorrichtung (24) nach einem der Ansprüche 22 bis 34, die als unidirektionales Ventil konfiguriert ist und ein Ventilelement (96) umfasst, das durch Differenzdruck betätigbar ist, um den Durchlass (42) zu öffnen und zu schließen.

36. Entlüftungsvorrichtung (24) nach Anspruch 35, wobei das poröse Element (56, 94, 98) dazu positioniert ist, das Ventilelement (96) gegen Bewegung entlang des Durchlasses (42) festzuhalten.

37. Rohrleitungsauskleidung (12), umfassend mindestens eine Entlüftungsvorrichtung (24) nach einem der Ansprüche 22 bis 36.

38. Auskleidung (12) nach Anspruch 37, wobei der Körper (30) der oder jeder Entlüftungsvorrichtung (24) mit einer Wand der Auskleidung (12) verschmolzen ist.

39. Ausgekleidete Rohrleitung oder Rohrverbindung (10) umfassend mindestens eine Auskleidung (12) nach Anspruch 37 oder Anspruch 38.

## Revendications

1. Procédé de fabrication d'un évent (24) pour une gaine (12) de pipeline, le procédé comprenant le surmoulage d'un élément poreux (56, 94, 98) avec un corps (30) de polymère pour former un évent (24) dans lequel l'élément poreux (56, 94, 98) s'étend en travers d'un passage traversant (42) formé dans le corps (30) pendant le surmoulage.

2. Procédé selon la revendication 1, comprenant la formation d'au moins une bride (50, 54) interne dans le passage traversant (42) pendant le surmoulage, la bride (50, 54) étant positionnée pour limiter l'élément poreux (56, 94, 98) vis-à-vis d'un déplacement le long du passage traversant (42) et ayant une ouverture centrale qui maintient une communication fluidique entre l'élément poreux (56, 94, 98) et le passage traversant (42).

3. Procédé selon la revendication 2, comprenant la formation d'une paire desdites brides (50, 54) internes en opposition mutuelle aux abords de l'élément poreux (56, 94, 98).

4. Procédé selon l'une quelconque des revendications précédentes, comprenant la mise en prise d'un matériau de polymère du corps (30) avec une surface texturée de l'élément poreux (56, 94, 98), tandis que le matériau de polymère est dans un état fluide pendant le surmoulage.

5. Procédé selon l'une quelconque des revendications précédentes, comprenant la formation d'une liaison moléculaire entre le corps (30) de polymère et l'élément poreux (56, 94, 98).

6. Procédé selon l'une quelconque des revendications 1 à 3, comprenant l'interposition d'une garniture (84) élastique entre l'élément poreux (56, 94, 98) et le corps (30) pendant le surmoulage.

7. Procédé selon la revendication 6, dans lequel la garniture (84) ceinture un bord de l'élément poreux (56, 94, 98) et expose une région centrale de l'élément poreux (56, 94, 98).

8. Procédé selon la revendication 6 ou la revendication 7, comprenant la formation de la garniture (84) autour de l'élément poreux (56, 94, 98) dans une étape de surmoulage préliminaire.

9. Procédé selon la revendication 8, comprenant la mise en prise d'un matériau de la garniture (84), tandis qu'il se trouve dans un état fluide pendant le surmoulage, avec une surface texturée de l'élément poreux (56, 94, 98).

10. Procédé selon l'une quelconque des revendications 6 à 9, comprenant la formation d'une liaison moléculaire entre la garniture (84) et le corps (30) de polymère et/ou l'élément poreux (56, 94, 98).

11. Procédé selon l'une quelconque des revendications précédentes, dans lequel le corps (30) de polymère est un thermoplastique et est surmoulé sur l'élément poreux (56, 94, 98) lorsque le thermoplastique est fondu.

12. Procédé selon la revendication 1 ou la revendication 2, ou l'une quelconque des revendications 4, 5 ou 11 lorsqu'elles ne dépendent pas de la revendication 3 ou de la revendication 6, dans lequel l'élément poreux (56, 94, 98) est une fritte ou un aggloméré.

13. Procédé selon la revendication 12, dans lequel l'élément poreux est un aggloméré (94, 98) d'un polymère qui forme une liaison moléculaire avec le polymère du corps (30).

14. Procédé selon l'une quelconque des revendications précédentes, comprenant le support de l'élément poreux (56, 94, 98) dans une cavité de moule (64) serré entre des formations de moule (66, 68, 70, 72) internes opposées qui définissent au moins une partie du passage traversant (42).

15. Procédé de fabrication d'une gaine (12) de pipeline, comprenant l'insertion d'un évent (24) fabriqué par le procédé de l'une quelconque des revendications 1 à 14 dans une paroi de la gaine (12).

16. Procédé selon la revendication 15, comprenant la fusion du corps (30) de l'évent (24) avec la paroi de la gaine (12) lors de l'insertion de l'évent (24) dans la paroi de la gaine (12).

17. Procédé selon la revendication 16, comprenant le chauffage de régions de surface d'interface du corps (30) et de la paroi de la gaine (12) jusqu'à une température de ramollissement ou de fusion avant l'insertion de l'évent (24) dans la paroi de la gaine (12).

18. Procédé selon la revendication 17, comprenant le soudage par emboîtement de l'évent (24) à la paroi de la gaine (12).

19. Procédé selon l'une quelconque des revendications 15 à 18, comprenant la formation d'une liaison moléculaire entre le corps (30) de polymère et la paroi de la gaine (12).

20. Procédé selon l'une quelconque des revendications 15 à 19, comprenant en outre l'insertion de la gaine (12) dans un pipeline ou un joint de conduite (10) après l'insertion de l'évent (24) dans la paroi de la gaine (12).

21. Procédé selon la revendication 20, comprenant l'étirage à la filière de la gaine (12) après l'insertion de l'évent (24) dans la paroi de la gaine (12) et avant l'insertion de la gaine (12) dans le pipeline ou le joint de conduite (10).

22. Évent (24) pour une gaine (12) de pipeline, l'évent (24) comprenant un élément poreux (56, 94, 98) s'étendant en travers d'un passage traversant (42), et en communication fluidique avec celui-ci, défini au sein d'un corps (30) de polymère surmoulé qui incorpore l'élément poreux (56, 94, 98).

23. Évent (24) selon la revendication 22, comprenant au moins une bride (50, 54) interne dans le passage traversant (42), la ou chaque bride (50, 54) étant positionnée pour limiter l'élément poreux (56, 94, 98) vis-à-vis d'un déplacement le long du passage traversant (42) et ayant une ouverture centrale qui maintient une communication fluidique entre l'élément poreux (56, 94, 98) et le passage traversant (42).

24. Évent (24) selon la revendication 23, comprenant une paire desdites brides (50, 54) internes en opposition mutuelle aux abords de l'élément poreux (56, 94, 98).

25. Évent (24) selon l'une quelconque des revendications 22 à 24, dans lequel le matériau de polymère du corps (30) est absorbé dans l'élément poreux (56, 94, 98).

26. Évent (24) selon l'une quelconque des revendications 22 à 25, comprenant une liaison moléculaire entre le corps (30) de polymère et l'élément poreux (56, 94, 98).

27. Évent (24) selon l'une quelconque des revendications 22 à 24, comprenant une garniture (84) élastique interposée entre l'élément poreux (56, 94, 98) et le corps (30).

28. Évent (24) selon la revendication 27, dans lequel la garniture (84) ceinture un bord de l'élément poreux (56, 94, 98) et expose une région centrale de l'élément poreux (56, 94, 98).

29. Évent (24) selon la revendication 27 ou la revendication 28, dans lequel la garniture (84) est surmoulée sur l'élément poreux (56, 94, 98).

30. Évent (24) selon l'une quelconque des revendications 27 à 29, dans lequel le matériau de la garniture (84) est absorbé dans l'élément poreux (56, 94, 98).

31. Évent (24) selon l'une quelconque des revendications 27 à 30, comprenant une liaison moléculaire entre la garniture (84) et l'élément poreux (56, 94, 98).

32. Évent (24) selon l'une quelconque des revendications 22 à 31, dans lequel le corps (30) de polymère est constitué d'un matériau thermoplastique.

33. Évent (24) selon la revendication 22 ou la revendication 23, ou l'une quelconque des revendications 25, 26 ou 32 lorsqu'elles ne dépendent pas de la revendication 24 ou de la revendication 27, dans lequel l'élément poreux (56, 94, 98) est une fritte ou un aggloméré.

34. Évent (24) selon la revendication 33, dans lequel l'élément poreux est un aggloméré (94, 98) d'un polymère qui est joint au polymère du corps (30) par une liaison moléculaire.

35. Évent (24) selon l'une quelconque des revendications 22 à 34, configuré sous la forme d'une vanne unidirectionnelle et comprenant un élément vanne (96) qui peut être actionné par une pression différentielle pour ouvrir et fermer le passage traversant (42).

36. Évent (24) selon la revendication 35, dans lequel l'élément poreux (56, 94, 98) est positionné pour limiter l'élément vanne (96) vis-à-vis d'un déplacement le long du passage traversant (42).

37. Gaine (12) de pipeline comprenant au moins un évent (24) de l'une quelconque des revendications 22 à 36.

38. Gaine (12) selon la revendication 37, dans laquelle le corps (30) de l'évent ou de chaque évent (24) est fondu avec une paroi de la gaine (12).

39. Pipeline ou joint de conduite (10) gainé comprenant au moins une gaine (12) de la revendication 37 ou de la revendication 38.
